# EUROPÄISCHE PATENTSCHRIFT

(11) **EP 2 851 718 B1**
(45) Veröffentlichungstag und Bekanntmachung des Hinweises auf die Patenterteilung: **07.10.2020**
(21) Anmeldenummer: 14182097.7
(22) Anmeldetag: 25.08.2014
(51) Int. Cl.: G02B 6/00, F21V 8/00, B60Q 3/00, F21S 43/14

(54) **Beleuchtungseinrichtung eines Kraftfahrzeugs**
Illumination device of a motor vehicle
Dispositif d'éclairage d'un véhicule automobile

(30) Priorität: 18.09.2013 DE 102013218739
(43) Veröffentlichungstag der Anmeldung: 25.03.2015
(73) Patentinhaber: Automotive Lighting Reutlingen GmbH, 72762 Reutlingen (DE)
(72) Erfinder: Kleiner, Thomas, 72800 Eningen (DE)
(74) Vertreter: DREISS Patentanwälte PartG mbB

(56) Entgegenhaltungen:
- EP-A1- 2 500 754
- WO-A1-2012/052946
- DE-A1-102010 025 208
- US-A1- 2006 209 524
- US-A1- 2009 185 389

## Beschreibung

Die vorliegende Erfindung betrifft eine Beleuchtungseinrichtung eines Kraftfahrzeugs nach dem Oberbegriff des Anspruchs 1. Eine solche Beleuchtungseinrichtung ist aus der US 2009/0185389 A1 bekannt.

Aus dem Stand der Technik sind verschiedenartige Beleuchtungseinrichtungen für Kraftfahrzeuge bekannt. So unterscheidet man zwischen Scheinwerfern und Leuchten. Scheinwerfer sind im Frontbereich eines Fahrzeugs angeordnet. Sie dienen neben der Verkehrssicherheit durch eine Sichtbarmachung des Fahrzeugs für andere Verkehrsteilnehmer insbesondere der Ausleuchtung der Fahrbahn vor dem Fahrzeug, insbesondere in Form von Abblendlicht, Fernlicht, Nebellicht oder einer beliebig anderen, bspw. adaptiven Lichtverteilung (z.B. Stadtlicht, Autobahnlicht, Teilfernlicht, Markierungslicht, etc), um die Sicht für den Fahrer des Fahrzeugs zu verbessern.

Leuchten dienen überwiegend der Verkehrssicherheit durch Sichtbarmachung des Fahrzeugs für andere Verkehrsteilnehmer. So werden Bugleuchten im Frontbereich des Fahrzeugs beispielsweise als Tagfahrlicht, Blinklicht oder Positionslicht und Heckleuchten im Heckbereich des Fahrzeugs beispielsweise als Bremslicht, Rückleuchte, Rückfahrlicht oder Blinklicht eingesetzt. Die Bugleuchten können dabei in einem Scheinwerfer integriert sein, sie können aber auch als separate Leuchten ausgebildet und im Frontbereich des Fahrzeugs angeordnet sein. Eine Leuchte kann eine oder mehrere Leuchtenfunktionen erfüllen. In einer Heckleuchte sind üblicherweise mehrere Leuchtenfunktionen integriert.

Die Beleuchtungseinrichtungen umfassen mindestens eine Lichtquelle, bspw. in Form einer Glühlampe, Gasentladungslampe oder Halbleiterlichtquelle, zum Erzeugen von Licht. Ferner umfassen sie mindestens eine Primäroptik zum Bündeln des erzeugten Lichts. Die Primäroptik kann als ein Reflektor (Hohlspiegel) ausgebildet sein, der das Licht mittels herkömmlicher Spiegelung reflektiert. Die Primäroptik kann aber auch als ein lichtdurchlässiger Körper aus Glas oder Kunststoff ausgebildet sein (sog. Vorsatzoptik), wobei die Bündelung des Lichts dann durch Brechung beim Eintritt in den Körper und/oder Austritt aus dem Körper und/oder durch Totalreflexion an äußeren Grenzflächen des Körpers erfolgt.

Außerdem ist es bekannt, in Beleuchtungseinrichtungen Lichtleiter zu verwenden, in denen eintretende Lichtstrahlen durch Totalreflexion propagiert, d.h. weitergeleitet werden und über definierte Lichtauskoppelflächen derart umgelenkt werden, dass sie an vorgegebenen Lichtaustrittsflächen aus dem Lichtleiter austreten. Das Licht kann dabei - insbesondere bei im Wesentlichen stabförmig ausgebildeten Lichtleitern - über Stirnflächen des Lichtleiters eingekoppelt werden. Es kann aber auch - zusätzlich oder alternativ - in einem Bereich entlang einer Längserstreckung des Lichtleiters, also durch eine sog. Mitteneinkopplung, Licht eingekoppelt werden. Grundsätzlich wird im Folgenden eine Einkopplung von Licht in einen Lichtleiter, die nicht über Stirnflächen des Lichtleiters erfolgt, als Mitteneinkopplung bezeichnet.

Auch die Lichtleiter sind üblicherweise als ein lichtdurchlässiger Körper aus Glas oder Kunststoff ausgebildet. Das Material der Lichtleiter kann starr oder bis zu einem gewissen Grad flexibel sein. Die Lichtleiter können in Beleuchtungseinrichtungen ähnlich einer Lichtquelle eingesetzt werden, wobei für die Gestaltung der Form des Lichtleiters selbst und auch der Lichtaustrittfläche des Lichtleiters ein großer Spielraum gegeben ist. Dadurch gibt es für ein Design der Beleuchtungseinrichtung durch den Einsatz von Lichtleitern vielfältige, charakteristische Gestaltungsmöglichkeiten.

Unter Mitteneinkopplung wird die Einkopplung von Licht in einen stabförmigen Lichtleiter an einer beliebigen Stelle, aber nicht an den Enden, verstanden. Bevorzugt wird Licht in sichtbare Bereiche des Lichtleiters eingekoppelt. Eine Mitteneinkopplung in einen Lichtleiter ist bspw. aus der DE 10 2010 025 208 A1 bekannt. Die dort gezeigte Beleuchtungseinrichtung weist einen ersten Lichtleiter mit einer Lichteintrittsfläche, einer Lichtauskoppelfläche und einer Lichtaustrittsfläche auf. Ein zweiter Lichtleiter ist dazu ausgebildet, Licht über Mitteneinkopplung in den ersten Lichtleiter einzukoppeln. Dazu liegt der zweite Lichtleiter mit seiner Lichtaustrittsfläche im Wesentlichen tangential an der Lichteintrittsfläche des ersten Lichtleiters an. Die beiden Lichtleiter sind dabei formschlüssig miteinander verbunden. In einer bevorzugten Ausführungsform sind die beiden Lichtleiter der Lichtleiteranordnung als einstückiges Spritzgussteil hergestellt. Das ist jedoch relativ aufwendig und bedarf umfangreicher Planung, insbesondere um ein Entformen der einteiligen Lichtleiteranordnung zu ermöglichen. Die Herstellung der Lichtleiteranordnung kann aufgrund von Hinterschnitten erschwert sein. Die beiden Lichtleiter können aber auch separat hergestellt werden.

Nachteilig bei der Beleuchtungseinrichtung mit der bekannten Lichtleiteranordnung ist, dass wenn die Lichtleiteranordnung mehrteilig ausgebildet ist, die Lichtleiter also separat voneinander ausgebildet sind, die Verbindungsstelle zwischen den Lichtleitern eine Störstelle darstellt, an der Licht in ungewünschter Weise aus dem Lichtleiter ausgekoppelt wird. Folglich sinkt die Effizienz bzw. der Wirkungsgrad der Lichtleiteranordnung. Außerdem bewirkt das über die Störstelle unkontrolliert austretende Licht auf einen Betrachter ein inhomogenes Erscheinungsbild der Lichtleiteranordnung. Auch im Kaltzustand ist die Verbindungsstelle als dunkle Fläche deutlich sichtbar und bewirkt ein optisch unschönes, inhomogenes Erscheinungsbild des Lichtleiters.

Ausgehend von dem beschriebenen Stand der Technik liegt der vorliegenden Erfindung die Aufgabe zugrunde, eine Lichtleiteranordnung umfassend mindestens zwei Lichtleiter, wobei einer der Lichtleiter in den anderen Lichtleiter im Wege einer Mitteneinkopplung Licht einkoppelt, möglichst einfach und kostengünstig herzustellen und die mindestens zwei Lichtleiter so miteinander zu verbinden, dass Licht aus dem einen Lichtleiter möglichst effizient in den anderen Lichtleiter eingekoppelt wird.

Zur Lösung dieser Aufgabe wird ausgehend von der Beleuchtungseinrichtung der eingangs genannten Art vorgeschlagen, dass die Lichtaustrittsfläche des mindestens einen zweiten Lichtleiters eine Prismenstruktur aufweist, die komplementär zu der Prismenstruktur der Lichtauskoppelfläche des ersten Lichtleiters ausgebildet ist.

Dabei ist bevorzugt, dass auf der Lichtaustrittsfläche des zweiten Lichtleiters Auskoppelelemente angeordnet sind.

Die Lichtleiter weisen bekanntermaßen totalreflektierende Eigenschaften auf. Eine Totalreflexion findet an einer Grenzfläche zwischen zwei Medien unterschiedlicher optischer Dichte statt. Dabei wird das Licht an der Grenzfläche totalreflektiert, wenn ein Einfallswinkel bzw. Auftreffwinkel des Lichts einen bestimmten Grenzwinkel bezüglich der Grenzfläche unterschreitet. Der Grenzwinkel ist vom jeweils gewählten Material der beiden an der Grenzfläche zusammenkommenden Medien abhängig.

Erfindungsgemäß dient der Luftspalt zwischen der Lichtaustrittsfläche des mindestens einen zweiten Lichtleiters und der Lichtauskoppelfläche des ersten Lichtleiters dazu, Störstellen zwischen den Lichtleitern - wie sie im Stand der Technik vorhanden sind - zu vermeiden. Dadurch ist der Übergang zwischen dem ersten Lichtleiter und dem mindestens einen zweiten Lichtleiter weder im ausgeschalteten Zustand noch im eingeschalteten Zustand zu erkennen. Im eingeschalteten Zustand ergibt sich ein besonders homogenes Erscheinungsbild, wenn der Lichtstrom des über den mindestens einen zweiten Lichtleiter in den ersten Lichtleiter eingespeisten Lichts klein im Vergleich zu dem Lichtstrom des in dem ersten Lichtleiter geführten Lichts ist. Auf diese Weise erfährt das Erscheinungsbild des ersten Lichtleiters keine Störung durch das über den mindestens einen zweiten Lichtleiter eingekoppelte Licht.

Der erste Lichtleiter und der mindestens eine zweite Lichtleiter sind separate Teile, die problemlos gefertigt werden können. Hinterschnitte können durch die Einzelfertigung vermieden werden. Im eingebauten Zustand wird der mindestens eine zweite Lichtleiter z.B. durch eine mechanische Vorrichtung in seiner Position relativ zu dem ersten Lichtleiter gehalten. Es kann eine mechanische Vorrichtung zur Halterung der beiden Lichtleiter relativ zueinander vorgesehen sein. Diese mechanische Vorrichtung kann eine Schale sein, die den mindestens einen zweiten Lichtleiter aufnimmt. Diese Schale weist eine Öffnung an der Lichteinkoppelfläche und der Lichtauskoppelfläche des zweiten Lichtleiters auf. Die Schale hat die Funktion, den zweiten Lichtleiter in seiner Position zu halten. Zusätzlich oder alternativ kann der zweite Lichtleiter mit Rastnasen und/oder Befestigungslaschen gehaltert werden. Der erste Lichtleiter wird an der Lichtauskoppelfläche des mindestens einen zweiten Lichtleiters angesetzt. Über eine an den ersten Lichtleiter seitlich angebrachte Finne oder über eine Befestigungslasche wird der erste Lichtleiter an den zweiten Lichtleiter angepresst, so dass die zueinander komplementären Prismen auf dem ersten und zweiten Lichtleiter ineinandergreifen. Der erste Lichtleiter ist in einem schienenförmigen U-Profil oder einem ähnlichen Profil aufgenommen. Das schienenförmige U-Profil weist an der Stelle, an der der zweite Lichtleiter ansetzt eine Öffnung auf. Der erste Lichtleiter wird durch Rastnasen und/oder Haltelaschen gehaltert. Der Luftspalt zwischen den komplementären Prismen von erstem und zweitem Lichtleiter ist aufgrund der toleranzbehafteten nicht perfekten Herstellbarkeit gegeben. Zusätzlich kann der Luftspalt durch absichtlich eingebrachte Erhebungen in den Prismentälern und/oder Prismenspitzen des ersten und/oder zweiten Lichtleiters sichergestellt werden.

In der erfindungsgemäßen Beleuchtungseinrichtung tritt das aus dem mindestens einen zweiten Lichtleiter austretende Licht über die Lichtauskoppelfläche des ersten Lichtleiters in den ersten Lichtleiter ein. Das bedeutet, dass die Lichtauskoppelfläche des ersten Lichtleiters in diesem Bereich nicht nur in dem ersten Lichtleiter propagierte Lichtstrahlen auf die Lichtaustrittsfläche lenkt, sondern gleichzeitig auch eine Lichteintrittsfläche für den ersten Lichtleiter bildet.

Erfindungsgemäß ist vorgesehen, dass die Lichtaustrittsfläche des mindestens einen zweiten Lichtleiters eine Struktur aufweist, die komplementär zu einer Struktur der Lichtauskoppelfläche des ersten Lichtleiters ausgebildet ist. Die Struktur muss zwei Aufgaben erfüllen:
Es muss einerseits möglich sein, dass Licht von dem mindestens einen zweiten Lichtleiter in den ersten Lichtleiter eintreten kann. Dazu könnte die Struktur, relativ zum ankommenden Licht, bereichsweise mindestens eine derart steil angeordnete Lichteintrittsfläche aufweisen, bei der der Auftreffwinkel des Lichts aus dem mindestens einen zweiten Lichtleiter den Grenzwinkel zur Totalreflexion überschreitet, um in diesem Fall die Totalreflexion zu verhindern und einen Eintritt des Lichts in den ersten Lichtleiter zu ermöglichen. Das Licht tritt im Wesentlichen ungehindert, abgesehen von eventuellen Brechungseffekten, in den ersten Lichtleiter ein.

Andererseits soll propagiertes Licht im ersten Lichtleiter an der Struktur des ersten Lichtleiters ausgekoppelt (d.h. in Richtung der Lichtaustrittsfläche umgelenkt) werden, so dass das Licht an der Lichtaustrittsfläche den ersten Lichtleiter und damit die gesamte Lichtleiteranordnung verlässt. Dazu könnte die Struktur, relativ zum ankommenden Licht, bereichsweise auch mindestens eine derart flach angeordnete Lichtauskoppelfläche aufweisen, bei der der Auftreffwinkel des Lichts den Grenzwinkel zur Totalreflexion unterschreitet, um in diesem Fall das Licht durch Totalreflexion auf die Lichtaustrittsfläche umzulenken.

Dazu ist erfindungsgemäß vorgesehen, dass die Lichtauskoppelfläche des ersten Lichtleiters eine Prismenstruktur aufweist. Besonders bevorzugt ist dabei, wenn die Prismenstruktur in einem entlang der Längserstreckung des ersten Lichteiters angeordneten Längsschnitt dreieckig, insbesondere sägezahnförmig ausgebildet ist. Bevorzugt ist eine Prismenreihe in Längsrichtung des ersten Lichtleiters vorgesehen. Im Gegensatz zum Stand der Technik ist es aber auch möglich, mehrere Prismenreihen in Längsrichtung des ersten Lichtleiters nebeneinander anzuordnen, wobei sich jede der Prismenreihen vorzugsweise senkrecht zur Längserstreckung des ersten Lichtleiters erstreckt. Die einzelnen Prismenreihen können dabei unterschiedlich ausgebildet sein. Besonders vorteilhaft ist eine Sägezahnform der Prismenstruktur. Ein Sägezahn weist in der Regel zwei unterschiedlich steile Flanken auf, die in einem solchen Winkel angeordnet sein können, dass eine der Flanken die nötige Steilheit zum Eintritt des Lichts aus dem mindestens einen zweiten Lichtleiter und die andere Flanke die nötige Flachheit zur Totalreflexion des in dem ersten Lichtleiter propagierten Lichts aufweist.

Möglich ist dabei auch, dass der erste Lichtleiter an der Auskoppelfläche mehrere, in der Längserstreckung des ersten Lichtleiters nebeneinander angeordnete, parallel zueinander verlaufende Prismenreihen aufweist, wobei die Prismenreihen jeweils quer zu der Längserstreckung des ersten Lichtleiters verlaufen. Damit können zwei oder mehr zweite Lichtleiter nebeneinander an dem ersten Lichtleiter angeordnet werden. Der Lichteintritt in den ersten Lichtleiter erfolgt nach dem gleichen Prinzip (mit Luftspalt), als wenn nur ein zweiter Lichtleiter Licht in den ersten Lichtleiter einkoppeln würde. Der Vorteil einer Anordnung mehrerer zweiter Lichtleiter an dem ersten Lichtleiter und der möglichen Einkopplung von Licht aus mehreren zweiten Lichtleitern besteht darin, dass der Lichtstrom des über einen einzelnen zweiten Lichtleiter eingekoppelten Lichts relativ klein ist, wodurch sichergestellt ist, dass der Lichtstrom des in dem ersten Lichtleiter propagierten Lichts deutlich größer als der Lichtstrom des über einen zweiten Lichtleiter eingekoppelten Lichts. Dadurch ergibt ist im eingeschalteten Zustand ein besonders homogenes Erscheinungsbild der Lichtleiteranordnung.

Ergänzend hierzu ist vorgesehen, dass einzelne Prismenreihen unterschiedliche Prismenstrukturen aufweisen. Dadurch ist es z.B. möglich, bei Bedarf unterschiedliche Auskoppelrichtungen des Lichts zu erzeugen, so dass das Licht in unterschiedlichen Richtungen aus dem ersten Lichtleiter austritt.

Ferner ist vorgesehen, dass der erste Lichtleiter im Wesentlichen stabförmig ausgebildet ist und an mindestens einer Stirnfläche eine Lichteintrittsfläche aufweist. Der mindestens eine zweite Lichtleiter kann sich im Laufe der Längserstreckung zur Realisierung einer Mitteneinkopplung tangential an den ersten Lichtleiter anschmiegen, um das von den Stirnflächen her propagierte Licht im ersten Lichtleiter durch zusätzliches Licht zu verstärken.

In der Lichtleiteranordnung kann der erste Lichtleiter auch gekrümmt ausgebildet sein. Der erste Lichtleiter kann dabei auch derart gekrümmt sein, dass er ringförmig ausgebildet ist. Letztendlich kann der erste Lichtleiter auch als ein geschlossener Lichtleiter-Ring ausgebildet sein. Dabei kann eine ringförmige Lichtaustrittsfläche für das aus der Lichtleiteranordnung austretende Licht realisiert werden.

Da der erste Lichtleiter die Lichtaustrittsfläche aus der Lichtleiteranordnung darstellt, und die Form der Lichtaustrittsfläche von der Form des ersten Lichtleiters bestimmt wird, kann die Lichtaustrittsfläche in Längs- und in Quererstreckung nahezu beliebig gestaltet werden, was für das von außen sichtbare Design der gesamten Beleuchtungseinrichtung charakterisierend sein kann.

Weiter ist vorgesehen, dass der mindestens eine zweite Lichtleiter gekrümmt oder geradlinig ausgebildet ist und an einer Stirnseite eine Lichteintrittsfläche aufweist. Die Form des mindestens einen zweiten Lichtleiters spielt für das von außen sichtbare Design der Lichtleiteranordnung eine untergeordnete Rolle, so dass die Ausgestaltung des mindestens einen zweiten Lichtleiters den baulichen und technischen Bedingungen in dem Kraftfahrzeug angepasst sein kann. Der zweite Lichtleiter folgt vorzugsweise zumindest teilweise dem Verlauf des ersten Lichtleiters, um in diesem Licht mittels Mitteneinkopplung einkoppeln zu können.

Außerdem ist vorgesehen, dass der stirnseitigen Lichteintrittsfläche des ersten Lichtleiters und der stirnseitigen Lichteintrittsfläche des mindestens einen zweiten Lichtleiters jeweils mindestens eine Lichtquelle zugeordnet ist, die verschieden farbiges Licht aussenden. So ist es z.B. möglich, dass dem ersten Lichtleiter an der Lichteintrittsfläche eine weiß leuchtende Lichtquelle, vorzugsweise eine weiß leuchtende Leuchtdiode, zugeordnet ist und dem mindestens einen zweiten Lichtleiter an der Lichteintrittsfläche eine gelb leuchtende Lichtquelle, vorzugsweise eine gelb leuchtende Leuchtdiode, zugeordnet ist. Dadurch ergibt sich die Möglichkeit, durch Einschalten der dem ersten Lichtleiter zugeordneten weißen Lichtquelle bspw. ein Tagfahrlicht oder ein Positionslicht durch die Lichtleiteranordnung zu erzeugen. Durch Einschalten der dem mindestens einen zweiten Lichtleiter zugeordneten gelben Lichtquelle kann mit der gleichen Lichtleiteranordnung bspw. ein Blinklicht erzeugt werden. Im Blinklichtbetrieb kann bspw. wechselweise gelbes Licht (Blinklicht) und weißes Licht (Tagfahrlicht oder Positionslicht) aus dem ersten Lichtleiter ausgesandt werden. Im Blinklichtbetrieb der Lichtleiteranordnung kann die dem ersten Lichtleiter zugeordnete weiße Lichtquelle gedimmt werden. Natürlich können zur Verstärkung des Lichtstroms jeder Lichteintrittsfläche auch mehrere Lichtquellen zugeordnet werden. Außerdem wäre es denkbar, bspw. zur Realisierung einer Heckleuchte, gelbes, rotes und/oder weißes Licht in der Lichtleiteranordnung miteinander zu kombinieren. Diese Ausgestaltung mit mehreren verschiedenfarbigen Lichtquellen hat den Vorteil, dass über ein- und dieselbe Lichtaustrittsfläche unterschiedliche Leuchtenfunktionen realisiert werden können.

Das Licht des mindestens einen zweiten Lichtleiters kann außerdem dazu dienen, Licht im ersten Lichtleiter aufzufrischen. Insbesondere lange erste Lichtleiter weisen über ihre Längserstreckung eine sichtbare Farbverschiebung bis hin zu einer unerwünschten, eventuell sogar nicht mehr den gesetzlichen Anforderungen genügenden Farbe hin auf. Durch die zusätzliche Einspeisung von Licht durch den mindestens einen zweiten Lichtleiter kann dieser Effekt verhindert werden. Das heißt, dass durch den mindestens einen zweiten Lichtleiter nicht nur die Helligkeit des in dem ersten Lichtleiter propagierten und über seine Lichtaustrittsfläche ausgesandten Lichts erhöht bzw. konstant gehalten werden kann, sondern auch die Lichtfarbe konstant gehalten werden kann.

Die erfindungsgemäße Beleuchtungseinrichtung ist vorzugsweise zur Erzeugung von mindestens einer Leuchtenfunktion ausgebildet. Das oben genannte Beispiel betrifft die Realisierung von Leuchtenfunktionen im Frontbereich eines Kraftfahrzeugs. Natürlich ist es auch möglich, in der gleichen Weise Leuchtenfunktionen im Heckbereich zu realisieren und zu kombinieren. So könnte bspw. dem ersten Lichtleiter eine weiße Lichtquelle zur Erzeugung eines Rückfahrlichts zugeordnet sein. Dem mindestens einen zweiten Lichtleiter kann eine gelbe Lichtquelle zur Erzeugung eines Blinkers und/oder eine rote Lichtquelle zur Erzeugung eines Rücklichts zugeordnet sein. Auch eine Kombination mit Rücklicht und Bremslicht sind möglich, wobei dabei alle verwendeten Lichtquellen rot leuchten müssen.

In einer Weiterführung dieser Idee kann vorgesehen sein, dass der stirnseitigen Lichteintrittsfläche des ersten Lichtleiters und/oder der stirnseitigen Lichteintrittsfläche des mindestens einen zweiten Lichtleiters jeweils mindestens zwei Lichtquellen zugeordnet sind, die verschieden farbiges Licht aussenden. So kann dem ersten Lichtleiter und dem mindestens einen zweiten Lichtleiter an der jeweiligen Lichteintrittsfläche eine weiß leuchtende Lichtquelle sowie eine gelb leuchtende Lichtquelle zugeordnet sein. Im Betrieb kann die Lichtquelle des mindestens einen zweiten Lichtleiters die jeweilige Funktion des ersten Lichtleiters durch Aktivieren der Lichtquelle mit der gleichen Farbe unterstützen. Auch ein animiertes Ein- und Ausschalten des Tagfahrlichts oder des Positionslichts ist durch temporäres gezieltes Zuschalten von Licht einer anderen als der für die Leuchtfunktion benötigten Lichtfarbe möglich.

Weiterhin ist vorgesehen, dass die Beleuchtungseinrichtung mehrere zweite Lichtleiter umfasst, wobei die Lichtaustrittsflächen der zweiten Lichtleiter in der Längserstreckung des ersten Lichtleiters hintereinander angeordnet sind. Wenn z.B. das Licht der zweiten Lichtleiter der Erzeugung eines Blinklichts dient, so kann jedem zweiten Lichtleiter eine gelb leuchtende Lichtquelle zugeordnet sein. Durch die hintereinander angeordneten Lichtaustrittsflächen der zweiten Lichtleiter ist bspw. eine Realisierung eines sog. wischenden Blinkers möglich. Dazu werden die Lichtquellen der hintereinander angeordneten zweiten Lichtleiter sequentiell nacheinander eingeschaltet, so dass sich eine bevorzugt in Abbiegerichtung des Fahrzeugs wandernde Blinkerinformation ergibt. Eine solche Blinkerinformation ist für andere Verkehrsteilnehmer gut interpretierbar und erhöht die allgemeine Verkehrssicherheit.

Vorgesehen ist außerdem, dass sich, quer zur Längserstreckung des mindestens einen zweiten Lichtleiters betrachtet, eine Querschnittsfläche des mindestens einen zweiten Lichtleiters, insbesondere im Bereich der Lichtaustrittsfläche, mit zunehmendem Abstand von der Lichteintrittsfläche verkleinert. Dadurch wird die Effizienz des Lichteintritts vom mindestens einen zweiten Lichtleiter in den ersten Lichtleiter erhöht, da möglichst viel Licht vom mindestens einen zweiten Lichtleiter in den ersten Lichtleiter übertagen werden kann.

Vorteilhafte Ausführungsformen der vorliegenden Erfindung werden nachfolgend anhand der Figuren erläutert. Es zeigen:
- Figur 1: eine Beleuchtungseinrichtung eines Kraftfahrzeugs in einer schematischen Darstellung;
- Figur 2: eine Lichtleiteranordnung einer Beleuchtungseinrichtung eines Kraftfahrzeugs in einer perspektivischen Darstellung;
- Figur 3: einen ersten Lichtleiter der Lichtleiteranordnung aus Figur 1 in einer ersten Ausführungsform im Detail;
- Figur 4: einen zweiten Lichtleiter der Lichtleiteranordnung aus Figur 1 im Detail;
- Figur 5: einen Bereich zwischen dem ersten und dem zweiten Lichtleiter mit einer Darstellung eines Eintritts von Licht vom zweiten Lichtleiter in den ersten Lichtleiter;
- Figur 6: den Bereich zwischen dem ersten und dem zweiten Lichtleiter mit einer Darstellung einer Totalreflexion des im ersten Lichtleiter propagierten Lichts;
- Figur 7: mögliche Strahlenverläufe von Licht im ersten und im zweiten Lichtleiter;
- Figur 8: den ersten Lichtleiter der Lichtleiteranordnung aus Figur 1 in einer zweiten Ausführungsform in
- Figur 9: einem Querschnitt; eine Ausgestaltung einer Lichtleiteranordnung mit als Vertiefungen und Erhebungen verwirklichten Prismenstrukturen;
- Figur 10: eine Ausgestaltung einer Lichtleiteranordnung mit nur als Vertiefungen verwirklichten Prismenstrukturen, welche nicht Teil des beanspruchten Gegenstandes ist; und
- Figur 11: eine Ausgestaltung einer Lichtleiteranordnung mit nur als Erhebungen verwirklichten Prismenstrukturen, welche nicht Teil des beanspruchten Gegenstandes ist.

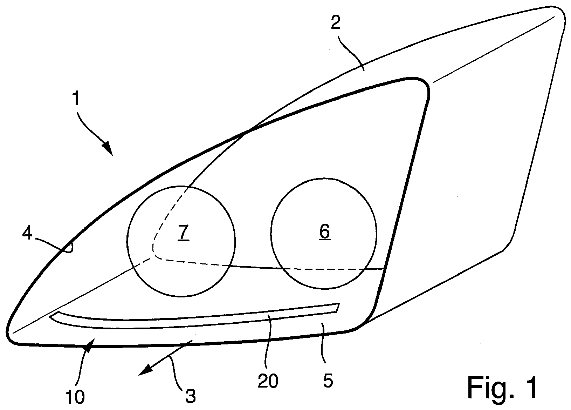

In Figur 1 zeigt eine erfindungsgemäße Beleuchtungseinrichtung 1 eines Kraftfahrzeugs in einer schematischen Darstellung, die beispielhaft als Scheinwerfer ausgebildet ist. Die Beleuchtungseinrichtung 1 umfasst ein Scheinwerfergehäuse 2, das vorzugsweise aus Kunststoff gefertigt ist. Das Scheinwerfergehäuse 2 weist in einer Lichtaustrittsrichtung 3 eine Lichtaustrittsöffnung 4 auf, die durch eine transparente Abdeckscheibe 5 verschlossen ist, um ein Eindringen von Staub, Schmutz oder Feuchtigkeit in das Innere der Beleuchtungseinrichtung 1 zu verhindern. Die Abdeckscheibe 5 besteht aus Kunststoff oder Glas und kann als eine klare Scheibe ohne optisch wirksame Elemente oder als eine Streuscheibe mit optisch wirksamen Elementen, bspw. in Form von Zylinderlinsen oder Prismen, ausgebildet sein.

Im Inneren der Beleuchtungseinrichtung 1 sind zwei Lichtmodule 6 und 7 angeordnet. Dabei kann das Lichtmodul 6 z.B. ein Abblendlicht erzeugen, das bspw. zur Erzeugung eines Fernlichts nach bekannten Verfahren umschaltbar ist. Das Lichtmodul 7 kann bspw. zur Erzeugung eines Nebellichts dienen.

Außerdem ist im Gehäuse 2 der Beleuchtungseinrichtung 1 eine Lichtleiteranordnung 10 angeordnet, deren Längserstreckung ein Vielfaches größer ist als ihre Quererstreckung. Eine Lichtaustrittsfläche 20 der Lichtleiteranordnung 10 zeigt in Lichtaustrittsrichtung 3. Die Lichtleiteranordnung 10 dient vorzugsweise zur Erzeugung mindestens einer Leuchtenfunktion, wie beispielsweise ein Tagfahrlicht, ein Blinklicht, ein Positionslicht, ein Begrenzungslicht und/oder eine beliebig andere Leuchtenfunktion.

Die erfindungsgemäße Beleuchtungseinrichtung 1 könnte auch im Heckbereich des Kraftfahrzeugs angeordnet sein. Dabei entfallen die Lichtmodule 6 und 7, wobei die Beleuchtungseinrichtung 1 lediglich zur Erzeugung von Leuchtenfunktionen, wie z.B. Rücklicht, Bremslicht, Rückfahrlicht oder Blinklicht dient. Die entsprechenden Leuchtenfunktionen werden bevorzugt durch die Lichtleiteranordnung 10 erzeugt.

Die erfindungsgemäße Beleuchtungseinrichtung 1 könnte auch mehrere Lichtleiteranordnungen 10 umfassen, die unterschiedlich ausgebildet sein können.

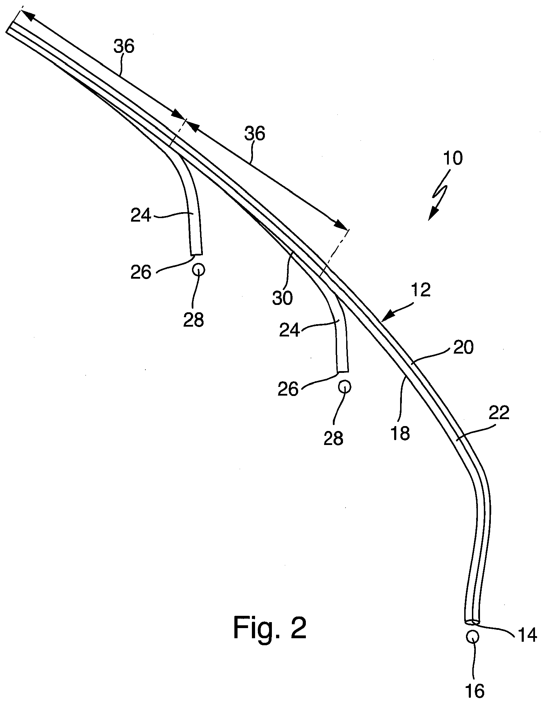

Figur 2 zeigt die Lichtleiteranordnung 10 der Beleuchtungseinrichtung 1 in einer perspektivischen Darstellung. Die Lichtleiteranordnung 10 dient bevorzugt zur Erzeugung von Leuchtenfunktionen im Front- und/oder Heckbereich des Kraftfahrzeugs.

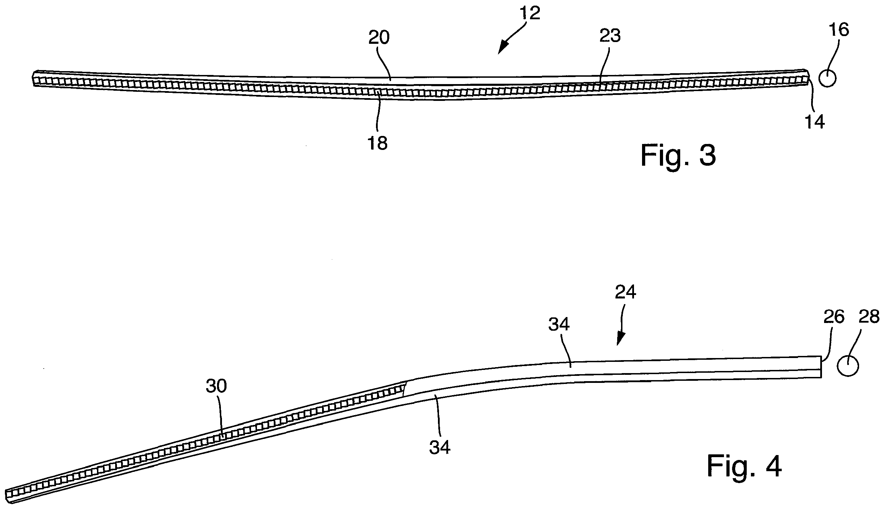

Die Lichtleiteranordnung 10 umfasst einen ersten Lichtleiter 12, der im Wesentlichen gekrümmt ausgebildet ist. Er könnte auch stabförmig oder ringförmig oder auch als geschlossener Ring ausgebildet sein. Figur 3 zeigt den ersten Lichtleiter 12 im Detail. Der erste Lichtleiter 12 weist eine Längserstreckung auf, die ein Vielfaches größer ist als seine Quererstreckung, und ist bevorzugt aus Glas oder transparentem Kunststoff hergestellt. Der erste Lichtleiter 12 weist totalreflektierende Eigenschaften auf.

Der erste Lichtleiter 12 weist eine erste Lichteintrittsfläche 14 auf, die an mindestens einer Stirnseite des ersten Lichtleiters 12 angeordnet ist. Vor der Lichteintrittsfläche 14 ist mindestens eine Lichtquelle 16 angeordnet. Das ausgesandte Licht der Lichtquelle 16 wird vorzugsweise, z.B. durch eine entsprechende Optik, in Richtung der Lichteintrittsfläche 14 gebündelt gelenkt.

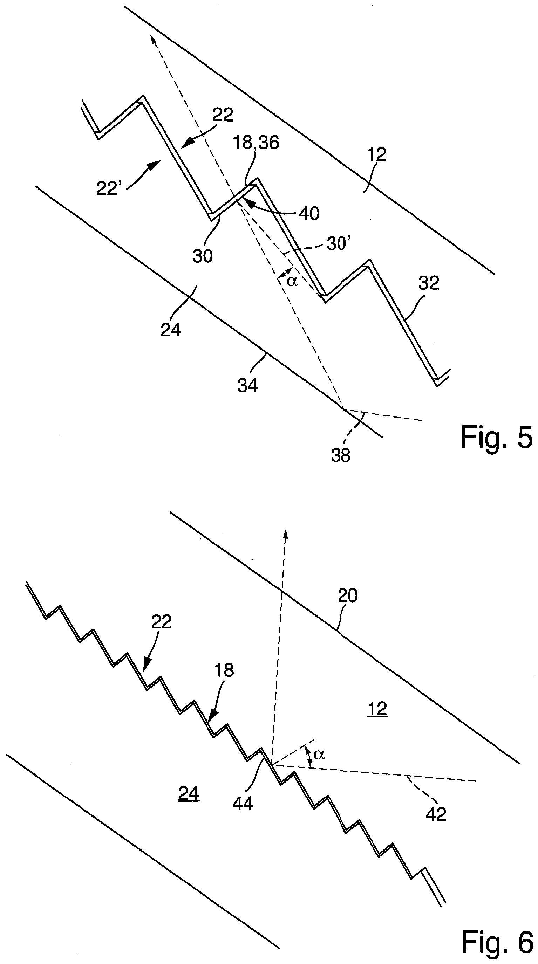

Der erste Lichtleiter 12 weist darüber hinaus eine Lichtauskoppelfläche 18 auf, die im ersten Lichtleiter 12 propagiertes Licht in Richtung der Lichtaustrittsfläche 20 durch Totalreflexion umlenkt. Dazu weist die Lichtauskoppelfläche 18 eine Prismenstruktur 22, insbesondere eine sägezahnförmige Struktur (siehe Figuren 5 und 6) auf. Die Prismenstruktur 22 verläuft entlang der Längserstreckung des ersten Lichtleiters 12 in einer Prismenreihe. Die Lichtauskoppelfläche 18 verläuft in Figur 3 über die gesamte Längserstreckung des ersten Lichtleiters 12. Es ist jedoch auch möglich, dass zumindest Endbereiche des ersten Lichtleiters 12 (zu den Stirnflächen hin) keine Lichtauskoppelflächen 18 aufweisen. Die Lichtaustrittsfläche 20 ist transmittierend für Lichtstrahlen, die zuvor auf die Lichtauskoppelfläche 18 getroffen sind, d.h. die Lichtstrahlen durchqueren den Lichtleiter 12 nachdem sie auf die Lichtauskoppelfläche 18 getroffen sind und bevor sie den Lichtleiter 12 über die Lichtaustrittsfläche 20 verlassen. Andere Lichtstrahlen sollen auch an den Grenzflächen 23 im Bereich der Lichtaustrittsfläche 20 totalreflektiert werden.

In dem Ausführungsbeispiel der Figur 2 weist die Lichtleiteranordnung 10 zwei zweite Lichtleiter 24 auf, die sich tangential an den ersten Lichtleiter 12 im Bereich der Lichtauskoppelfläche 18 des ersten Lichtleiters 12 anschmiegen. Figur 4 zeigt den zweiten Lichtleiter 24 im Detail. Der zweite Lichtleiter 24 ist im Wesentlichen gekrümmt ausgebildet. Der zweite Lichtleiter 24 ist bevorzugt aus Glas oder transparentem Kunststoff hergestellt und weist totalreflektierende Eigenschaften auf.

Der zweite Lichtleiter 24 weist eine Lichteintrittsfläche 26 auf, die an mindestens einer Stirnseite des zweiten Lichtleiters 24 angeordnet ist. Vor der Lichteintrittsfläche 26 ist mindestens eine Lichtquelle 28 angeordnet. Das ausgesandte Licht der Lichtquelle 16 wird, z.B. durch eine entsprechende Optik, vorzugsweise in Richtung der Lichteintrittsfläche 26 gebündelt gelenkt.

Der zweite Lichtleiter 24 weist darüber hinaus eine Lichtaustrittsfläche 30 auf, die eine Prismenstruktur 22', insbesondere eine sägezahnförmige Struktur (siehe Figur 5) aufweist. Die Prismenstruktur 22' stellt zum einen Auskoppelelemente dar, an denen das Licht den Lichtleiter 24 direkt verlässt. Dies ist anders als bei dem ersten Lichtleiter 12, wo das Licht an den Auskoppelelementen 22 der Auskoppelfläche 18 reflektiert wird und den Lichtleiter 12 über die gegenüberliegende Austrittsfläche 20 verlässt. Die bei dem zweiten Lichtleiter 24 auf der Austrittsfläche 30 ausgebildete Prismenstruktur 22' verläuft entlang der Längserstreckung des Lichtleiters 24 in einer Prismenreihe. Die Lichtaustrittsfläche 30 verläuft vorzugsweise nur über einen Teilbereich der Längserstreckung des zweiten Lichtleiters 24. Die sägezahnförmige Struktur 22' der Lichtaustrittsfläche 30 des zweiten Lichtleiters 24 ist komplementär zur Lichtauskoppelfläche 18 des ersten Lichtleiters 12 ausgebildet. Zwischen der Lichtaustrittsfläche 30 des zweiten Lichtleiters 24 und der Lichtauskoppelfläche 18 des ersten Lichtleiters 12 ist ein Luftspalt 32 ausgebildet (siehe Figur 5). Im eingebauten Zustand muss dazu der zweite Lichtleiter 24 bspw. durch eine mechanische Vorrichtung in ihrer Position relativ zum ersten Lichtleiter 12 gehalten werden. Zu diesem Zweck kann eine geeignete mechanische Vorrichtung (nicht dargestellt) eingesetzt werden. Diese kann bspw. eine Schale, Rastnasen und/oder Befestigungslaschen umfassen, welche den zweiten Lichtleiter 24 relativ zu dem ersten Lichtleiter 12 positioniert und hält. Der erste Lichtleiter 12 kann bspw. in einem schienenförmigen U-Profil oder einem ähnlichen Profil aufgenommen und gehaltert sein.

Im Bereich der Lichtaustrittsfläche 30 kann also Licht über den Luftspalt 32 und die Lichtauskoppelfläche 18 per Mitteneinkopplung in den ersten Lichtleiter 12 eintreten. Das bedeutet, dass die Lichtauskoppelfläche 18 des ersten Lichtleiters 12 im Bereich der gegenüberliegenden Lichtaustrittsfläche 30 des zweiten Lichtleiters 24 eine weitere Lichteintrittsfläche 36 für den ersten Lichtleiter darstellt, die entlang der Längserstreckung des ersten Lichtleiter 12 angeordnet ist.

Abgesehen von der Lichtaustrittsfläche 30 und der Lichteintrittsfläche 26 sind die übrigen Flächen des zweiten Lichtleiters 24 Grenzflächen 34, an denen das im zweiten Lichtleiter 12 propagierte Licht durch Totalreflexion weitergeleitet werden kann.

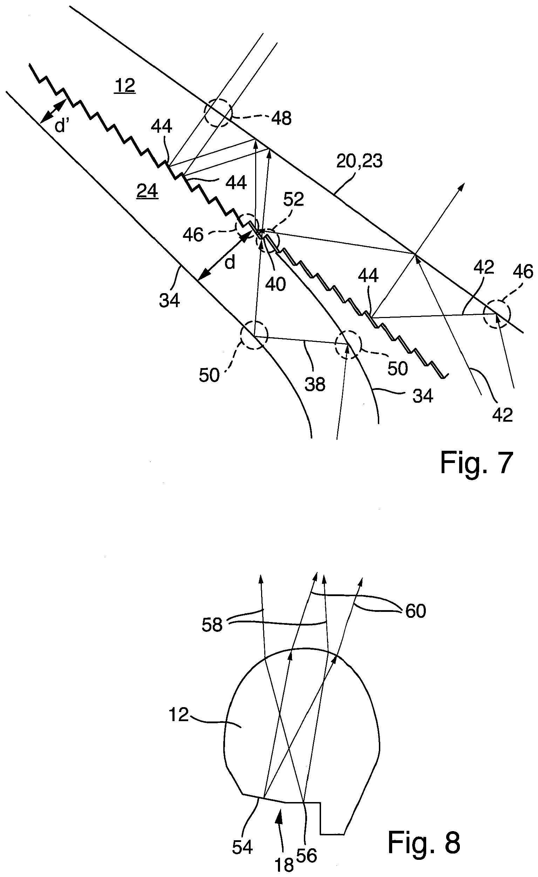

Der zweite Lichtleiter 24 ist bevorzugt derart ausgebildet, dass sich quer zu seiner Längserstreckung eine Querschnittsfläche, insbesondere im Bereich der Lichtaustrittsfläche 30, mit zunehmendem Abstand von der Lichteintrittsfläche 26 verkleinert (siehe Bezugszeichen d und d' in Figur 7).

An Hand der Figuren 5 bis 7 soll die Arbeitsweise der Lichtleiteranordnung 10 erläutert werden. Die Lichtauskoppelfläche 18 des ersten Lichtleiters 12 hat erfindungsgemäß im Bereich der gegenüberliegenden Lichtaustrittsfläche 30 des zweiten Lichtleiters 24 auch die Funktion einer weiteren Lichteintrittsfläche 36.

Allgemein gilt, dass eine Totalreflexion an einer Grenzfläche zwischen zwei Medien unterschiedlicher optischer Dichte stattfindet. Dabei wird das Licht an der Grenzfläche vom optisch dichteren zum optisch dünneren Medium totalreflektiert, wenn ein Einfallswinkel α bzw. Auftreffwinkel eines Lichtstrahls, der bezüglich der Flächennormalen der Grenzfläche gemessen wird, einen bestimmten Grenzwinkel bezüglich der Normalen der Grenzfläche überschreitet. Der Grenzwinkel ist vom jeweils gewählten Material der beiden an der Grenzfläche zusammenkommenden Medien abhängig.

In der erfindungsgemäßen Beleuchtungseinrichtung 1 wird die Grenzfläche des zweiten Lichtleiters 24 durch die Lichtaustrittsfläche 30 gebildet. Die Flächennormale ist in Figur 5 mit dem Bezugszeichen 30' bezeichnet. An Hand von Figur 5 wird die Lichteinkopplung vom zweiten Lichtleiter 24 in den ersten Lichtleiter 12 erläutert. Ein im zweiten Lichtleiter 24 propagierter Lichtstrahl 38 trifft auf eine Flanke 40 der Sägezahnstruktur 22, welche die Lichtaustrittsfläche 30 bildet. Der Lichtstrahl 38 trifft derart steil auf die Flanke 40 (Auftreffwinkel α des Lichtstrahls 38 unterschreitet einen Grenzwinkel zur möglichen Totalreflexion), dass er aus dem zweiten Lichtleiter 24 austritt, anstatt totalreflektiert zu werden. Der Lichtstrahl 38 tritt aus dem zweiten Lichtleiter 24 aus, durchquert den Spalt 32 und tritt dann im Wesentlichen ungehindert, abgesehen von eventuellen Brechungseffekten, über die Lichteintrittsfläche 36 in den ersten Lichtleiter 12 ein.

An Hand von Figur 6 wird die Auskoppelung von Licht aus dem ersten Lichtleiter 12 mittels der Lichtauskoppelfläche 18 erläutert. Ein im ersten Lichtleiter 12 propagierter Lichtstrahl 42 trifft so flach (mit einem so großen Auftreffwinkel α) auf eine Flanke 44 der Sägezahnstruktur 22, dass dass der Lichtstrahl 42 an der Lichtauskoppelfläche 18 in Richtung der Lichtaustrittsfläche 20 totalreflektiert wird.

In Figur 7 werden mehrere mögliche Strahlenverläufe in der Lichtleiteranordnung 10 zusammengefasst dargestellt. Der Lichtstrahl 42 ist ein im ersten Lichtleiter 12 propagierter Lichtstrahl. Der Lichtstrahl 42 wird bei flachem Auftreffwinkel α (d.h. Auftreffwinkel α ist größer als der Grenzwinkel zur Totalreflexion) an der Grenzfläche 23 bzw. der Lichtauskoppelfläche 18 reflektiert (in dem mit dem Bezugszeichen 46 bezeichneten Bereich). Die Lichtauskoppelfläche 18 ist derart gestaltet, dass das im ersten Lichtleiter 12 propagierte Licht nur auf die flach angeordneten Flanken 44 der Sägezahnstruktur 22 fallen kann. Dadurch fallen die Lichtstrahlen 42 relativ flach (mit einem relativ großen Auftreffwinkel α) auf die Grenzfläche 23 bzw. die Lichtauskoppelfläche 18 und werden dort totalreflektiert. Wenn die Lichtstrahlen 42 ausreichend steil (mit einem relativ kleinen Auftreffwinkel α) auf die Flächen 18; 23 auftreffen, werden treten sie aus dem Lichtleiter 12 aus (in dem mit dem Bezugszeichen 48 bezeichneten Bereich).

Der Lichtstrahl 38 wird zunächst im zweiten Lichtleiter 24 propagiert. Der Lichtstrahl 38 wird bei flachem Auftreffen (Auftreffwinkel α ist größer als der Grenzwinkel zur Totalreflexion) an der Grenzfläche 34 reflektiert (in dem mit dem Bezugszeichen 50 bezeichneten Bereich). Im weiteren Verlauf ist es möglich, dass der Lichtstrahl 38 auf die steil angeordnete Flanke 40 der Sägezahnstruktur 22' des zweiten Lichtleiters 24 trifft. Hier ist der Grenzwinkel zur Totalreflexion unterschritten, so dass das Licht aus dem zweiten Lichtleiter 24 austritt, den Luftspalt 32 durchquert und in den ersten Lichtleiter 12 eintritt (in dem mit dem Bezugszeichen 52 bezeichneten Bereich). Anschließend wird der Lichtstrahl 38 im ersten Lichtleiter 12 weiter propagiert, so als wenn er in den ersten Lichtleiter 12 von vorn herein eingetreten wäre. Der zweite Lichtleiter 24 stellt damit eine Zuführung von Licht in den ersten Lichtleiter 12 in einem zwischen den Enden des Lichtleiters 12 angeordneten Bereich dar. Das Licht des zweiten Lichtleiters 24 kann außerdem dazu dienen, Licht im ersten Lichtleiter 12, insbesondere farblich, aufzufrischen.

Die Lichtleiteranordnung 10 kann zur Erzeugung von unterschiedlichen Leuchtenfunktionen unterschiedlich farbiges Licht aussenden. Dazu ist vorgesehen, dass der Lichteintrittsfläche 14 des ersten Lichtleiters 12 und der Lichteintrittsfläche 26 des zweiten Lichtleiters 24 jeweils eine Lichtquelle 16 bzw. 28 zugeordnet ist, die verschieden farbiges Licht aussenden. So ist es z.B. möglich, dass dem ersten Lichtleiter 12 an der Lichteintrittsfläche 14 eine weiß leuchtende Lichtquelle 16, vorzugsweise eine weiß leuchtende Leuchtdiode, zugeordnet ist und dem zweiten Lichtleiter 24 an der Lichteintrittsfläche 26 eine gelb leuchtende Lichtquelle 28, vorzugsweise eine gelb leuchtende Leuchtdiode, zugeordnet ist. Dadurch ergibt sich die Möglichkeit, durch Einschalten der dem ersten Lichtleiter 12 zugeordneten weißen Lichtquelle 16 bspw. ein Tagfahrlicht oder ein Positionslicht in der Beleuchtungseinrichtung 1 zu erzeugen. Durch Einschalten der dem zweiten Lichtleiter 24 zugeordneten gelben Lichtquelle 28 kann mit der gleichen Lichtleiteranordnung 10 bspw. ein Blinklicht erzeugt werden. Zur Verstärkung des Lichtstroms können jeder Lichteintrittsfläche 14 bzw. 26 auch mehrere Lichtquellen 16 und/oder 28, die Licht in der gleichen Farbe aussenden, zugeordnet werden.

Die genannte Kombination der weißen und der gelben Lichtquelle im Frontbereich des Kraftfahrzeugs stellt nur ein Beispiel dar. Die Lichtleiteranordnung 10 kann in Beleuchtungseinrichtungen 1 im Front- und/oder im Heckbereich eines Fahrzeugs angewandt werden. So lassen sich auch für den Heckbereich vielfältige Kombinationen von Leuchtenfunktionen realisieren, wie z.B. eine Kombination aus Rückfahrlicht und Blinklicht oder Rücklicht und Bremslicht oder Rückfahrlicht und Rücklicht. Auch mehr als zwei Leuchtenfunktionen können in der Beleuchtungseinrichtung 1 realisiert werden, da die Anzahl der an den ersten Lichtleiter 12 anschließbaren zweiten Lichtleiter 24 nicht begrenzt ist. Jeder der zweiten Lichtleiter 24 kann Licht einer bestimmten Intensität und Farbe in den ersten Lichtleiter 12 einkoppeln, so dass das aus dem ersten Lichtleiter 12 austretende Licht entsprechende Leuchtenfunktionen erzeugen kann. Eine Leuchtfunktion des ersten Lichtleiters 12 wird entweder durch das Licht von einem oder von mehreren zweiten Lichtleitern 24 erzeugt. Zusätzlich kann noch an mindestens einem Ende des ersten Lichtleiters 10 Licht eingekoppelt werden, das zur Erzeugung der Leuchtfunktion dient. Die jeweilige Leuchtstärke und Lichtfarbe einer Leuchtenfunktion kann nach den gesetzlichen Vorgaben eingestellt werden.

Der zweite Lichtleiter 24 kann aber auch nur die Lichtstärke des im ersten Lichtleiter 12 erzeugten Lichts bei Bedarf verstärken. So kann z.B. der erste Lichtleiter 12 ein rotes Rücklicht erzeugen. Durch Einschalten einer roten Lichtquelle 28 des zweiten Lichtleiters 24, durch den zusätzliches Licht zur Verfügung gestellt wird, kann bei Bedarf ein Bremslicht erzeugt werden.

Außerdem ist es möglich, dass zumindest einer Lichteintrittsfläche 14 und 26 mehr als eine Leuchtdiode zugeordnet sind, wobei die einzelnen Leuchtdioden an der Lichteintrittsfläche 14 und/oder 26 verschieden farbiges Licht aussenden.

Die Lichtleiteranordnung 10 kann mehrere zweite Lichtleiter 24 aufweisen (siehe Figur 2), die in Längserstreckung des ersten Lichtleiters 12 hintereinander angeordnet sind. Wenn z.B. das Licht der zweiten Lichtleiter 24 der Erzeugung eines Blinklichts dient, so kann jedem zweiten Lichtleiter 24 eine gelb leuchtende Lichtquelle 28 zugeordnet sein. Durch die hintereinander angeordneten Lichtaustrittsflächen 30 der zweiten Lichtleiter 24 ist bspw. eine Realisierung eines sog. wischenden Blinkers möglich. Dazu werden z.B. die Lichtquellen 28 der verschiedenen zweiten Lichtleiter 24 sequentiell nacheinander eingeschaltet, so dass sich eine bevorzugt in Abbiegerichtung des Fahrzeugs wandernde Blinkerinformation ergibt.

Figur 8 zeigt den ersten Lichtleiter 12 der Lichtleiteranordnung 10 in einer zweiten, alternativen Ausführungsform in einem Querschnitt. Dabei weist der erste Lichtleiter 12 zwei parallel zueinander in Längsrichtung des ersten Lichtleiters 12 verlaufende Prismenreihen 54, 56 an der Lichtauskoppelfläche 18 auf. An die Prismenreihen 54, 56 kann jeweils ein zweiter Lichtleiter 24 angeordnet werden, wobei die Struktur der Lichtaustrittsfläche 30 des zweiten Lichtleiters 24 komplementär zur jeweiligen Prismenreihe 54, 56 des ersten Lichtleiters 12 ausgebildet ist. Auch hier ist der zweite Lichtleiter 24 derart angeordnet, dass sich zwischen der Lichtaustrittsfläche 30 des zweiten Lichtleiters 24 und der Lichtauskoppelfläche 18 des ersten Lichtleiters der Luftspalt 32 bildet (nicht dargestellt). Damit können zwei oder mehr als zwei zweite Lichtleiter 24 parallel am ersten Lichtleiter 12 angeordnet werden. Der Lichteintritt in den ersten Lichtleiter 12 erfolgt nach dem gleichen Verfahren, wie als wenn nur eine Prismenreihe ausgebildet ist (So wie es die Figuren 2 bis 7 zeigen). Die einzelnen Prismenreihen 54, 56 können dabei jeweils eine unterschiedliche Prismenstruktur aufweisen und damit unterschiedliche Auskoppelrichtungen 58, 60 erzeugen.

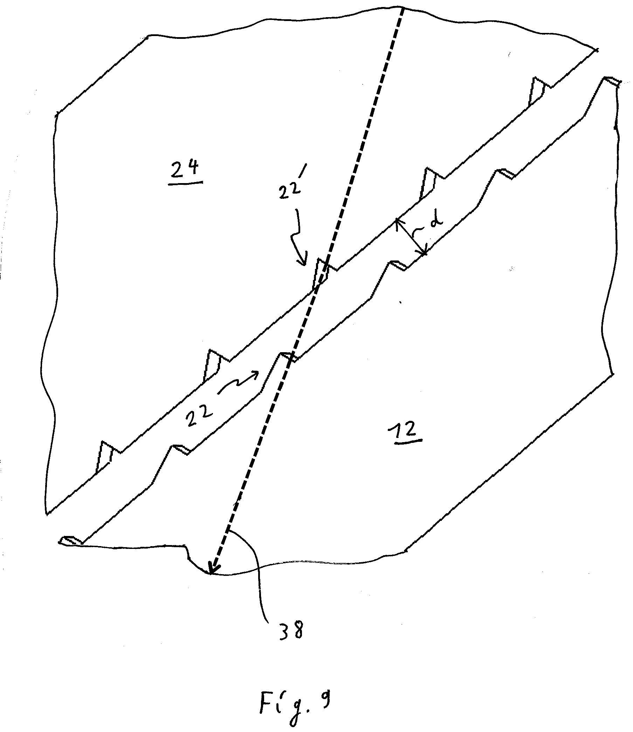

Figur 9 zeigt eine der Anordnung nach Figur 5 vergleichbare Anordnung aus einem ersten Lichtleiter 12 und einem zweiten Lichtleiter 24.

Der zweite Lichtleiter 24 weist Prismenstrukturen 22' auf, die als Vertiefungen in einer Grenzfläche des zweiten Lichtleiters verwirklicht sind. Der erste Lichtleiter 12 weist Prismenstrukturen 22 auf, die sich aus einer Grenzfläche des ersten Lichtleiters heraus erheben und dementsprechend erhabene Prismenstrukturen 22 sind.

Der erste Lichtleiter 12 und der zweite Lichtleiter 24 sind bei einem Ausführungsbeispiel der Erfindung so angeordnet, dass die Grenzfläche des zweiten Lichtleiters 24, die die als Vertiefungen verwirklichten Prismenstrukturen 22' aufweist, der Grenzfläche des ersten Lichtleiters 12 gegenüberliegt, welche erhabene Prismenstrukturen 22 aufweist.

Sowohl die als Vertiefungen verwirklichten Prismenstrukturen 22' als auch die als Erhebungen verwirklichten Prismenstrukturen 22 sind dabei so ausgestaltet und so angeordnet, dass eine Grenzfläche einer als Vertiefung verwirklichten Prismenstruktur 22' einer Grenzfläche einer erhabenen Prismenstruktur 22 so gegenüberliegt, dass aus der Grenzfläche der als Vertiefung verwirklichten Prismenstruktur 22' austretendes und durch den zwischen beiden Lichtleitern liegenden Luftspalt auf die Grenzfläche der erhabenen Prismenstruktur 22 auftreffendes Licht 38 dort so steil (das heißt unter einem so kleinen Winkel zur Flächennormalen) auftrifft, dass dieses Licht in die erhabene Prismenstruktur 22 der Grenzfläche des ersten Lichtleiters 12 eintritt. Die Anordnung der prismenförmigen Erhebungen 22 und Vertiefungen 22' ist bevorzugt so, dass immer genau eine als Vertiefung verwirklichte Prismenstruktur 22' mit einer als Erhebung verwirklichten Prismenstruktur 22 ein Paar bildet. Ein solches Paar zeichnet sich dadurch aus, dass aus der als Vertiefung verwirklichten Prismenstruktur 22' austretendes Licht in die als Erhebung verwirklichte Prismenstruktur 22 eintritt, so dass die Vertiefung 22' mit der Erhebung 22 über dieses Licht gekoppelt ist und dass die Vertiefung 22' mit keiner anderen Erhebung und die Erhebung 22 mit keiner anderen Vertiefung über solches Licht gekoppelt ist. Die Lage der Erhebungen 22 im ersten Lichtleiter 12 ist damit durch die Lage der Vertiefungen 22' im zweiten Lichtleiter 24, die Lichtaustrittsrichtung des aus dem zweiten Lichtleiter 24 austretenden Lichtes 38 und den Abstand d wischen dem ersten Lichtleiter 12 und dem zweiten Lichtleiter 24 festgelegt. Das Licht koppelt damit immer über genau zwei einander eineindeutig zugeordnete Prismenstrukturen von dem einen Lichtleiter in den anderen Lichtleiter über.

Abweichend von der dargestellten Ausgestaltung, bei der die Erhebungen nicht als zu den Vertiefungen komplementäre Negative verwirklicht sind, können die Erhebungen eben auch als solche Negative der Vertiefungen geformt sein. Unabhängig von diesen Ausgestaltungen ist es möglich, den zweiten Lichtleiter so dicht vor dem ersten Lichtleiter anzuordnen, dass die Erhebungen in die Vertiefungen hineinragen. Wesentlich ist jeweils, dass die Anordnung eine Auskopplung aus dem einen Lichtleiter und eine Einkopplung in den anderen Lichtleiter erlaubt. Der Abstand kann minimal sein oder auch wenige Millimeter betragen.

Ein Abstand zwischen den beiden Lichtleitern 12 und 24 erlaubt größere Fertigungstoleranzen und ermöglicht beim ersten Lichtleiter zusätzliche Auskoppelprismen zur Beeinflussung der Lichtverteilung.

Wie man aufgrund der Umkehrbarkeit des Lichtweges sofort sieht, kann der erste Lichtleiter 12 als Vertiefungen verwirklichte Prismenstrukturen und der zweite Lichtleiter 24 als Erhebungen verwirklichte Prismenstrukturen aufweisen.

Der quer zur Hauptlichtausbreitungsrichtung liegende Querschnitt der Lichtleiter 12 kann rund und/oder rechteckig sein.

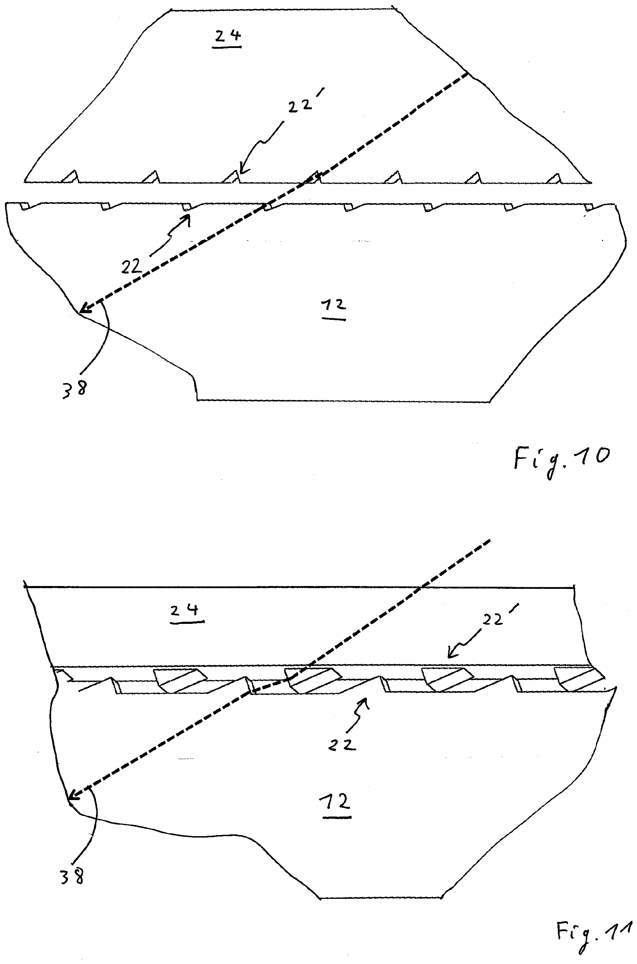

Figur 10 zeigt eine weitere Ausgestaltung einer Anordnung aus einem ersten Lichtleiter 12 und einem zweiten Lichtleiter 24.

Der zweite Lichtleiter 24 weist Prismenstrukturen 22' auf, die als Vertiefungen in einer Grenzfläche des zweiten Lichtleiters verwirklicht sind. Der erste Lichtleiter 12 weist Prismenstrukturen 22 auf, die ebenfalls als Vertiefungen in einer Grenzfläche eines Lichtleiters, hier des ersten Lichtleiters 12, verwirklicht sind.

Der erste Lichtleiter 12 und der zweite Lichtleiter 24 sind dabei ebenfalls so angeordnet, dass die Grenzfläche des zweiten Lichtleiters 24, die die als Vertiefungen verwirklichten Prismenstrukturen 22' aufweist, der Grenzfläche des ersten Lichtleiters 12 gegenüberliegt, welche die ebenfalls als Vertiefungen verwirklichten Prismenstrukturen 22 aufweist.

Die jeweils als Vertiefungen in einer Grenzfläche verwirklichten Prismenstrukturen 22 und 22' sind dabei so ausgestaltet und so angeordnet, dass eine Grenzfläche einer Prismenstruktur 22' des zweiten Lichtleiters 24 einer Grenzfläche einer Prismenstruktur 22 des ersten Lichtleiters so gegenüberliegt, dass aus der Grenzfläche der Prismenstruktur 22' austretendes und durch den zwischen beiden Lichtleitern liegenden Luftspalt auf die Grenzfläche der Prismenstruktur 22 auftreffendes Licht 38 dort so steil (das heißt unter einem so kleinen Winkel zur Flächennormalen) auftrifft, dass dieses Licht in die Prismenstruktur 22 der Grenzfläche des ersten Lichtleiters 12 eintritt. Die Anordnung der prismenförmigen Vertiefungen 22 und 22' ist bevorzugt so, dass immer genau eine als Vertiefung verwirklichte Prismenstruktur 22' mit einer ebenfalls als Vertiefung verwirklichten Prismenstruktur 22 ein Paar bildet. Ein solches Paar zeichnet sich dadurch aus, dass aus der Prismenstruktur 22' austretendes Licht in die Prismenstruktur 22 eintritt, so dass die Vertiefung 22' mit der Vertiefung 22 über dieses Licht gekoppelt ist und dass die Vertiefung 22' mit keiner anderen Vertiefung in der Grenzfläche des ersten Lichtleiters 12 und die Vertiefung 22 mit keiner anderen Vertiefung in der Grenzfläche des zweiten Lichtleiters 24 über solches Licht gekoppelt ist. Die Lage der Vertiefungen 22 im ersten Lichtleiter 12 ist damit durch die Lage der Vertiefungen 22' im zweiten Lichtleiter 24, die Lichtaustrittsrichtung des aus dem zweiten Lichtleiter 24 austretenden Lichtes 38 und den Abstand d zwischen dem ersten Lichtleiter 12 und dem zweiten Lichtleiter 24 festgelegt. Das Licht koppelt damit auch hier immer über genau zwei einander eineindeutig zugeordnete Prismenstrukturen von dem einen Lichtleiter in den anderen Lichtleiter über.

Wesentlich ist auch hier, dass die Anordnung eine Auskopplung aus dem einen Lichtleiter und eine Einkopplung in den anderen Lichtleiter erlaubt. Der Abstand kann minimal sein oder auch wenige Millimeter betragen.

Ein Abstand zwischen den beiden Lichtleitern 12 und 24 erlaubt größere Fertigungstoleranzen und ermöglicht beim ersten Lichtleiter zusätzliche Auskoppelprismen zur Beeinflussung der Lichtverteilung.

Auch hier gilt, dass der quer zur Hauptlichtausbreitungsrichtung liegende Querschnitt der Lichtleiter 12 und/oder 24 rund und/oder rechteckig sein kann.

Figur 11 zeigt eine weitere Ausgestaltung einer Anordnung aus einem ersten Lichtleiter 12 und einem zweiten Lichtleiter 24.

Der zweite Lichtleiter 24 weist Prismenstrukturen 22' auf, die als Erhebungen in einer Grenzfläche des zweiten Lichtleiters verwirklicht sind. Der erste Lichtleiter 12 weist Prismenstrukturen 22 auf, die ebenfalls als Erhebungen in einer Grenzfläche eines Lichtleiters, hier des ersten Lichtleiters 12 verwirklicht sind.

Der erste Lichtleiter 12 und der zweite Lichtleiter 24 sind dabei ebenfalls so angeordnet, dass die Grenzfläche des zweiten Lichtleiters 24, die die als Erhebungen verwirklichten Prismenstrukturen 22' aufweist, der Grenzfläche des ersten Lichtleiters 12 gegenüberliegt, welche die ebenfalls als Erhebungen verwirklichten Prismenstrukturen 22 aufweist.

Die jeweils als Erhebungen in einer Grenzfläche verwirklichten Prismenstrukturen 22 und 22' sind dabei so ausgestaltet und so angeordnet, dass eine Grenzfläche einer Prismenstruktur 22' des zweiten Lichtleiters 24 einer Grenzfläche einer Prismenstruktur 22 des ersten Lichtleiters so gegenüberliegt, dass aus der Grenzfläche der Prismenstruktur 22' austretendes und durch den zwischen beiden Lichtleitern liegenden Luftspalt auf die Grenzfläche der Prismenstruktur 22 auftreffendes Licht 38 dort so steil (das heißt unter einem so kleinen Winkel zur Flächennormalen) auftrifft, dass dieses Licht in die Prismenstruktur 22 der Grenzfläche des ersten Lichtleiters 12 eintritt. Die Anordnung der prismenförmigen Erhebungen 22 und 22' ist bevorzugt so, dass immer genau eine als Erhebung verwirklichte Prismenstruktur 22' mit einer ebenfalls als Erhebung verwirklichten Prismenstruktur 22 ein Paar bildet. Ein solches Paar zeichnet sich dadurch aus, dass aus der Prismenstruktur 22' austretendes Licht in die Prismenstruktur 22 eintritt, so dass die Erhebung 22' mit der Erhebung 22 über dieses Licht gekoppelt ist und dass die Erhebung 22' mit keiner anderen Erhebung in der Grenzfläche des ersten Lichtleiters 12 und die Erhebung 22 mit keiner anderen Erhebung in der Grenzfläche des zweiten Lichtleiters 24 über solches Licht gekoppelt ist. Die Lage der Erhebungen 22 im ersten Lichtleiter 12 ist damit durch die Lage der Erhebungen 22' im zweiten Lichtleiter 24, die Lichtaustrittsrichtung des aus dem zweiten Lichtleiter 24 austretenden Lichtes 38 und den Abstand d wischen dem ersten Lichtleiter 12 und dem zweiten Lichtleiter 24 festgelegt. Das Licht koppelt damit auch hier immer über genau zwei einander eineindeutig zugeordnete Prismenstrukturen von dem einen Lichtleiter in den anderen Lichtleiter über.

Wesentlich ist auch hier, dass die Anordnung eine Auskopplung aus dem einen Lichtleiter und eine Einkopplung in den anderen Lichtleiter erlaubt. Der Abstand kann minimal sein oder auch wenige Millimeter betragen.

Ein Abstand zwischen den beiden Lichtleitern 12 und 24 erlaubt größere Fertigungstoleranzen und ermöglicht beim ersten Lichtleiter zusätzliche Auskoppelprismen zur Beeinflussung der Lichtverteilung.

Auch hier gilt, dass der quer zur Hauptlichtausbreitungsrichtung liegende Querschnitt der Lichtleiter 12 und/oder 24 rund und/oder rechteckig sein kann.

Für sämtliche Ausgestaltungen gilt, dass die Lichtleiterquerschnitte neben runden Formen wie z.B. Kreis oder Ellipse auch Seitenbegrenzungen in Form von Geraden besitzen können. Dabei können diese geometrischen Formen auch gemischt vorkommen, wie beispielsweise bei einem Rechteck mit abgerundeten Ecken als Grundgeometrie des Lichtleiters.

## Patentansprüche

1. Beleuchtungseinrichtung (1) eines Kraftfahrzeugs, umfassend
- einen ersten Lichtleiter (12) zum Propagieren von Licht mittels Totalreflexion entlang einer Längserstreckung des ersten Lichtleiters (12), wobei die Längserstreckung um ein Vielfaches größer ist als eine Quererstreckung des ersten Lichtleiters (12), wobei der erste Lichtleiter (12) eine erste Lichteintrittsfläche (14) aufweist, die an mindestens einer Stirnseite des ersten Lichtleiters (12) angeordnet ist, wobei vor der Lichteintrittsfläche (14) mindestens eine Lichtquelle (16) angeordnet ist, und wobei der erste Lichtleiter (12) eine sich über einen Bereich der Längserstreckung erstreckende Lichtauskoppelfläche (18) aufweist, welche auf sie auftreffendes Licht auf eine der Lichtauskoppelfläche (18) im Wesentlichen gegenüberliegende Lichtaustrittsfläche (20) des ersten Lichtleiters (12) lenkt, und
- mindestens einen zweiten Lichtleiter (24) zum Propagieren von Licht mittels Totalreflexion entlang einer Längserstreckung des mindestens einen zweiten Lichtleiters (24), wobei der mindestens eine zweite Lichtleiter (24) eine Lichteintrittsfläche (26) aufweist, die an mindestens einer Stirnseite des zweiten Lichtleiters (24) angeordnet ist, und vor welcher Lichteintrittsfläche (26) mindestens eine Lichtquelle (28) angeordnet ist, und wobei der zweite Lichtleiter eine Lichtaustrittsfläche (30) aufweist, über die zumindest ein Teil des Lichts aus dem mindestens einen zweiten Lichtleiter (24) austritt, wobei der mindestens eine zweite Lichtleiter (24) derart in Bezug auf den ersten Lichtleiter (12) angeordnet ist, dass Licht des zweiten Lichtleiters (24) über eine Mitteneinkopplung in den ersten Lichtleiter (12) eintritt, wobei eine Mitteneinkopplung eine Einkopplung von Licht ist, die nicht über Stirnflächen des Lichtleiters erfolgt, wobei auf der Lichtaustrittsfläche des zweiten Lichtleiters Auskoppelelemente angeordnet sind und wobei das aus dem mindestens einen zweiten Lichtleiter (24) austretende Licht über die Lichtauskoppelfläche (18) des ersten Lichtleiters (12) in den ersten Lichtleiter (12) eintritt, wobei zwischen der Lichtaustrittsfläche (30) des mindestens einen zweiten Lichtleiters (24) und der Lichtauskoppelfläche (18) des ersten Lichtleiters (12) ein Luftspalt (32) ausgebildet ist, und wobei die Lichtauskoppelfläche (18) des ersten Lichtleiters (12) eine Prismenstruktur (22) aufweist, **dadurch gekennzeichnet, dass** die Lichtaustrittsfläche (30) des mindestens einen zweiten Lichtleiters (24) eine Prismenstruktur (22') aufweist, die komplementär zu der Prismenstruktur (22) der Lichtauskoppelfläche (18) des ersten Lichtleiters (12) ausgebildet ist.

2. Beleuchtungseinrichtung (1) nach Anspruch 1, **dadurch gekennzeichnet, dass** die Prismenstruktur (22) in einem entlang der Längserstreckung des ersten Lichteiters (12) angeordneten Längsschnitt dreieckig, insbesondere sägezahnförmig, ausgebildet ist.

3. Beleuchtungseinrichtung (1) nach einem der vorhergehenden Ansprüche, **dadurch gekennzeichnet, dass** der erste Lichtleiter (12) an der Auskoppelfläche (18) mehrere, in der Längserstreckung des ersten Lichtleiters (12) nebeneinander angeordnete, parallel zueinander verlaufende Prismenreihen (54, 56) aufweist, wobei die Prismenreihen (54, 56) jeweils quer zu der Längserstreckung des ersten Lichtleiters (12) verlaufen.

4. Beleuchtungseinrichtung (1) nach Anspruch 3, **dadurch gekennzeichnet, dass** einzelne Prismenreihen (54, 56) unterschiedliche Prismenstrukturen aufweisen.

5. Beleuchtungseinrichtung (1) nach einem der vorhergehenden Ansprüche, **dadurch gekennzeichnet, dass** der erste Lichtleiter (12) im Wesentlichen stabförmig ausgebildet ist und an mindestens einer Stirnfläche eine Lichteintrittsfläche (14) aufweist.

6. Beleuchtungseinrichtung (1) nach einem der vorhergehenden Ansprüche, **dadurch gekennzeichnet, dass** der erste Lichtleiter (12) gekrümmt ausgebildet ist.

7. Beleuchtungseinrichtung (1) nach Anspruch 6, **dadurch gekennzeichnet, dass** der erste Lichtleiter (12) ringförmig ausgebildet ist.

8. Beleuchtungseinrichtung (1) nach Anspruch 7, **dadurch gekennzeichnet, dass** der erste Lichtleiter (12) als ein geschlossener Ring ausgebildet ist.

9. Beleuchtungseinrichtung (1) nach einem der vorhergehenden Ansprüche, **dadurch gekennzeichnet, dass** der mindestens eine zweite Lichtleiter (24) an einer Stirnseite eine Lichteintrittsfläche (26) aufweist.

10. Beleuchtungseinrichtung (1) nach einem der vorhergehenden Ansprüche, **dadurch gekennzeichnet, dass** der mindestens eine zweite Lichtleiter (24) gekrümmt ausgebildet ist.

11. Beleuchtungseinrichtung (1) nach den Ansprüchen 5 und 9, **dadurch gekennzeichnet, dass** der stirnseitigen Lichteintrittsfläche (14) des ersten Lichtleiters (12) und der stirnseitigen Lichteintrittsfläche (26) des mindestens einen zweiten Lichtleiters (24) jeweils mindestens eine Lichtquelle (16; 28) zugeordnet ist, die verschieden farbiges Licht aussenden.

12. Beleuchtungseinrichtung (1) nach einem der Ansprüche 5, 9 oder 11, **dadurch gekennzeichnet, dass** der stirnseitigen Lichteintrittsfläche (14) des ersten Lichtleiters (12) und/oder der stirnseitigen Lichteintrittsfläche (26) des mindestens einen zweiten Lichtleiters (24) jeweils mindestens zwei Lichtquellen (16; 28) zugeordnet sind, die verschieden farbiges Licht aussenden.

13. Beleuchtungseinrichtung (1) nach einem der vorhergehenden Ansprüche, **dadurch gekennzeichnet, dass** die Beleuchtungseinrichtung (1) mehrere zweite Lichtleiter (24) umfasst, wobei die Lichtaustrittsflächen (30) der zweiten Lichtleiter (24) in der Längserstreckung des ersten Lichtleiters (12) hintereinander angeordnet sind.

14. Beleuchtungseinrichtung (1) nach einem der vorhergehenden Ansprüche, **dadurch gekennzeichnet, dass** sich, quer zur Längserstreckung des mindestens einen zweiten Lichtleiters (24) betrachtet, eine Querschnittsfläche (d, d') des mindestens einen zweiten Lichtleiters (24), insbesondere im Bereich der Lichtaustrittsfläche (30), mit zunehmendem Abstand von der Lichteintrittsfläche (26) verkleinert.

15. Beleuchtungseinrichtung (1) nach einem der vorhergehenden Ansprüche, **dadurch gekennzeichnet, dass** die Beleuchtungseinrichtung (1) zur Erzeugung von mindestens einer Leuchtenfunktion ausgebildet ist.

## Claims

1. Lighting device (1) of a motor vehicle, comprising
- a first light guide (12) for propagating light by means of total reflection along a longitudinal extension of the first light guide (12), the longitudinal extension being many times greater than a transverse extension of the first light guide (12), the first light guide (12) having a first light entry surface (14) which is arranged on at least one end face of the first light guide (12), wherein at least one light source (16) is arranged in front of the light entry surface (14), and wherein the first light guide (12) has a light outcoupling surface (18) extending over a region of the longitudinal extent, which directs light incident thereon to a light exit surface (20) of the first light guide (12) substantially opposite the light outcoupling surface (18), and
- at least one second light guide (24) for propagating light by means of total reflection along a longitudinal extension of the at least one second light guide (24), the at least one second light guide (24) having a light entry surface (26) which is arranged at at least one end face of the second light guide (24), and at least one light source (28) being arranged in front of which light entry surface (26), and wherein the second light guide has a light exit surface (30) via which at least part of the light emerges from the at least one second light guide (24), wherein the at least one second light guide (24) is arranged with respect to the first light guide (12) in such a way that light from the second light guide (24) enters the first light guide (12) via a central coupling, wherein a central coupling is a coupling in of light, which does not take place via end faces of the light guide, wherein decoupling elements are arranged on the light exit surface of the second light guide and wherein the light emerging from the at least one second light guide (24) enters the first light guide (12) via the light outcoupling surface (18) of the first light guide (12), wherein an air gap (32) is formed between the light exit surface (30) of the at least one second light guide (24) and the light outcoupling face (18) of the first light guide (12), and wherein the light outcoupling surface (18) of the first light guide (12) has a prism structure (22), **characterised in that** the light output surface (30) of the at least one second light guide (24) has a prism structure (22') which is formed complementary to the prism structure (22) of the light outcoupling surface (18) of the first light guide (12).

2. Lighting device (1) according to claim 1, **characterized in that** the prism structure (22) is triangular, in particular sawtooth-shaped, in a longitudinal section arranged along the longitudinal extent of the first light guide (12).

3. Lighting device (1) according to one of the preceding claims, **characterized in that** the first light guide (12) has, on the outcoupling surface (18), a plurality of prism rows (54, 56) which are arranged next to one another in the longitudinal extent of the first light guide (12) and run parallel to one another, the prism rows (54, 56) each running transversely to the longitudinal extent of the first light guide (12).

4. Lighting device (1) according to claim 3, **characterised in that** individual prism rows (54, 56) have different prism structures.

5. Lighting device (1) according to one of the preceding claims, **characterised in that** the first light guide (12) is substantially rod-shaped and has a light entry surface (14) on at least one end face.

6. Lighting device (1) according to one of the preceding claims, **characterised in that** the first light guide (12) is curved.

7. Lighting device (1) according to claim 6, **characterized in that** the first light guide (12) is of annular design.

8. Lighting device (1) according to claim 7, **characterized in that** the first light guide (12) is formed as a closed ring.

9. Lighting device (1) according to one of the preceding claims, **characterized in that** the at least one second light guide (24) has a light entry surface (26) at one end face.

10. Lighting device (1) according to one of the preceding claims, **characterised in that** the at least one second light guide (24) is curved.

11. Lighting device (1) according to claims 5 and 9, **characterised in that** at least one light source (16; 28), which emits differently coloured light, is associated with the end light entry surface (14) of the first light guide (12) and the end light entry surface (26) of the at least one second light guide (24).

12. Lighting device (1) according to one of claims 5, 9 or 11, **characterised in that** at least two light sources (16; 28), which emit differently coloured light, are respectively associated with the end light entry surface (14) of the first light guide (12) and/or the end light entry surface (26) of the at least one second light guide (24) .

13. Lighting device (1) according to one of the preceding claims, **characterized in that** the lighting device (1) comprises a plurality of second light guides (24), the light exit surfaces (30) of the second light guides (24) being arranged one behind the other in the longitudinal extension of the first light guide (12).

14. Lighting device (1) according to one of the preceding claims, **characterized in that**, viewed transversely to the longitudinal extent of the at least one second light guide (24), a cross-sectional area (d, d') of the at least one second light guide (24), in particular in the region of the light exit surface (30), decreases with increasing distance from the light entry surface (26).

15. Lighting device (1) according to one of the preceding claims, **characterized in that** the lighting device (1) is designed to generate at least one signal light function.

## Revendications

1. Dispositif d'éclairage (1) d'un véhicule automobile, comprenant
- un premier guide de lumière (12) pour propager de la lumière par réflexion totale le long d'une extension longitudinale du premier guide de lumière (12), dans lequel l'extension longitudinale est d'un multiple supérieure à une extension transversale du premier guide de lumière (12), dans lequel le premier guide de lumière (12) présente une première surface d'entrée de lumière (14) qui est agencée sur au moins une face frontale du premier guide de lumière (12), dans lequel au moins une source de lumière (16) est agencée devant la surface d'entrée de lumière (14), et dans lequel le premier guide de lumière (12) présente une surface de découplage de lumière (18) qui s'étend sur une zone de l'extension longitudinale et qui dirige de la lumière incidente sur elle vers une surface de sortie de lumière (20) du premier guide de lumière (12), qui est pour l'essentiel opposée à la surface de découplage de lumière (18), et
- au moins un deuxième guide de lumière (24) pour propager de la lumière par réflexion totale le long d'une extension longitudinale dudit au moins un deuxième guide de lumière (24), dans lequel ledit au moins un deuxième guide de lumière (24) présente une surface d'entrée de lumière (26) qui est agencée sur au moins une face frontale du deuxième guide de lumière (24), et devant laquelle surface d'entrée de lumière (26) est agencée au moins une source de lumière (28), et dans lequel le deuxième guide de lumière présente une surface de sortie de lumière (30) par laquelle sort au moins une partie de la lumière dudit au moins un deuxième guide de lumière (24), dans lequel ledit au moins un deuxième guide de lumière (24) est agencé par rapport au premier guide de lumière (12) de telle manière que de la lumière provenant du deuxième guide de lumière (24) entre dans le premier guide de lumière (12) par un couplage central, un couplage central étant un couplage de lumière qui ne se fait pas par des surfaces frontales du guide de lumière, dans lequel des éléments de découplage sont disposés sur la surface de sortie de lumière du deuxième guide de lumière, et dans lequel la lumière sortant dudit au moins un deuxième guide de lumière (24) entre dans le premier guide de lumière (12) par la surface de découplage de lumière (18) du premier guide de lumière (12), dans lequel une fente d'air (32) est formée entre la surface de sortie de lumière (30) dudit au moins un deuxième guide de lumière (24) et la surface de découplage de lumière (18) du premier guide de lumière (12), et dans lequel la surface de découplage de lumière (18) du premier guide de lumière (12) présente une structure prismatique (22), **caractérisé par le fait que** la surface de sortie de lumière (30) dudit au moins un deuxième guide de lumière (24) présente une structure prismatique (22') qui est réalisée de façon complémentaire de la structure prismatique (22) de la surface de découplage de lumière (18) du premier guide de lumière (12).

2. Dispositif d'éclairage (1) selon la revendication 1, **caractérisé par le fait que** la structure prismatique (22) est triangulaire, en particulier en forme de dents de scie, dans une coupe longitudinale disposée le long de l'extension longitudinale du premier guide de lumière (12) .

3. Dispositif d'éclairage (1) selon l'une quelconque des revendications précédentes, **caractérisé par le fait que** le premier guide de lumière (12) présente sur la surface de découplage (18) plusieurs rangées parallèles de prismes (54, 56) qui sont disposées les unes à côté des autres dans l'extension longitudinale du premier guide de lumière (12) et s'étendent parallèlement les unes aux autres, dans lequel les rangées de prismes (54, 56) s'étendent chacune transversalement à l'extension longitudinale du premier guide de lumière (12).

4. Dispositif d'éclairage (1) selon la revendication 3, **caractérisé par le fait que** des rangées de prismes (54, 56) individuelles présentent des structures prismatiques différentes.

5. Dispositif d'éclairage (1) selon l'une quelconque des revendications précédentes, **caractérisé par le fait que** le premier guide de lumière (12) est réalisé pour l'essentiel en forme de tige et présente une surface d'entrée de lumière (14) sur au moins une surface frontale.

6. Dispositif d'éclairage (1) selon l'une quelconque des revendications précédentes, **caractérisé par le fait que** le premier guide de lumière (12) est réalisé de manière courbée.

7. Dispositif d'éclairage (1) selon la revendication 6, **caractérisé par le fait que** le premier guide de lumière (12) est réalisé de manière annulaire.

8. Dispositif d'éclairage (1) selon la revendication 7, **caractérisé par le fait que** le premier guide de lumière (12) est conçu en tant qu'anneau fermé.

9. Dispositif d'éclairage (1) selon l'une quelconque des revendications précédentes, **caractérisé par le fait que** ledit au moins un deuxième guide de lumière (24) présente une surface d'entrée de lumière (26) sur une face frontale.

10. Dispositif d'éclairage (1) selon l'une quelconque des revendications précédentes, **caractérisé par le fait que** ledit au moins un deuxième guide de lumière (24) est réalisé de manière courbée.

11. Dispositif d'éclairage (1) selon les revendications 5 et 9, **caractérisé par le fait qu'**à la surface d'entrée de lumière de face frontale (14) du premier guide de lumière (12) et à la surface d'entrée de lumière de face frontale (26) dudit au moins un deuxième guide de lumière (24) est associée respectivement au moins une source de lumière (16; 28) qui émettent de la lumière de couleur différente.

12. Dispositif d'éclairage (1) selon l'une quelconque des revendications 5, 9 ou 11, **caractérisé par le fait qu'**à la surface d'entrée de lumière de face frontale (14) du premier guide de lumière (12) et/ou à la surface d'entrée de lumière de face frontale (26) dudit au moins un deuxième guide de lumière (24) sont associées respectivement au moins deux sources de lumière (16; 28) qui émettent de la lumière de couleur différente.

13. Dispositif d'éclairage (1) selon l'une quelconque des revendications précédentes, **caractérisé par le fait que** le dispositif d'éclairage (1) comprend une pluralité de deuxièmes guides de lumière (24), dans lequel les surfaces de sortie de lumière (30) des deuxièmes guides de lumière (24) sont disposées les unes derrière les autres dans l'extension longitudinale du premier guide de lumière (12).

14. Dispositif d'éclairage (1) selon l'une quelconque des revendications précédentes, **caractérisé par le fait que**, vue transversalement à l'extension longitudinale dudit au moins un deuxième guide de lumière (24), une aire de section transversale (d, d') dudit au moins un deuxième guide de lumière (24), en particulier au niveau de la surface de sortie de lumière (30), diminue avec l'augmentation de la distance de la surface d'entrée de lumière (26).

15. Dispositif d'éclairage (1) selon l'une quelconque des revendications précédentes, **caractérisé par le fait que** le dispositif d'éclairage (1) est conçu pour générer au moins une fonction de lampe.
